# EUROPÄISCHE PATENTSCHRIFT

(11) **EP 3 598 439 B1**
(45) Veröffentlichungstag und Bekanntmachung des Hinweises auf die Patenterteilung: **24.03.2021**
(21) Anmeldenummer: 19180498.8
(22) Anmeldetag: 17.06.2019
(51) Int. Cl.: G10L 15/26

(54) **VERFAHREN UND VORRICHTUNG ZUM ANSTEUERN EINER FUNKTION EINES HAUSHALTGERÄTS UND HAUSHALTGERÄT MIT VORRICHTUNG**
METHOD AND DEVICE FOR CONTROLLING A FUNCTION OF A HOUSEHOLD APPLIANCE, AND HOUSEHOLD APPLIANCE WITH A DEVICE
PROCÉDÉ ET DISPOSITIF DE COMMANDE D'UNE FONCTION D'UN APPAREIL ÉLECTROMÉNAGER ET APPAREIL ÉLECTROMÉNAGER POURVU DE DISPOSITIF

(30) Priorität: 16.07.2018 DE 102018117087; 21.02.2019 DE 102019104368
(43) Veröffentlichungstag der Anmeldung: 22.01.2020
(73) Patentinhaber: Miele & Cie. KG, 33332 Gütersloh (DE)
(72) Erfinder: Horstbrink, Stefan, 33335 Gütersloh (DE)

(56) Entgegenhaltungen:
- EP-A1- 2 801 972
- DE-A1-102015 206 566
- US-A1- 2014 188 463

## Beschreibung

Verfahren und Vorrichtung zum Ansteuern einer Funktion eines Haushaltgeräts und Haushaltgerät mit Vorrichtung

Die Erfindung betrifft ein Verfahren und eine Vorrichtung zum Ansteuern einer Funktion eines Haushaltgeräts und ein Haushaltgerät mit einer Vorrichtung zum Ansteuern einer Funktion des Haushaltgeräts.

Es ist möglich, eine Funktion eines Haushaltgeräts per Spracheingabe anzusteuern. Ein Haushaltgerät kann aus Sicherheitsgründen eine Sicherheits-Option aufweisen, um sicherzustellen, dass sich der Bediener in Sichtweite des zu bedienenden Gerätes befindet. Das Ansteuern per Spracheingabe kann nach der Aktivierung der Sicherheits-Option erfolgen, die beispielsweise in Form einer manuell zu bedienenden Bestätigungstaste zur Bestätigung der Spracheingabe, oder mittels eines Näherungssensors des Haushaltgeräts aktiviert werden kann. Wenn ein Bediener beispielsweise die Tür eines Backofens per Spracheingabe öffnen möchte, weil er beide Hände zum Halten eines Backblechs benötigt, kann er sich entscheiden, ob er das Backblech abstellt, um die Sicherheits-Option per Taste zu aktivieren oder gleich die Tür manuell bzw. per Tastendruck öffnet. Wenn das Haushaltgerät einen Näherungssensor aufweist, kann die Sicherheits-Option mittels des Näherungssensors aktiviert werden, allerdings kann hier eine unbeabsichtigte Aktivierung eines weiteren Haushaltgeräts mit Näherungssensor erfolgen, was ein unbeabsichtigtes Ansteuern des weiteren Haushaltgeräts zur Folge haben kann. Alternativ ist eine Aktivierung per Türkontaktschalter als Folge einer Türöffnung oder -Schließung durch den Bediener möglich

Die Schrift DE102015206566 A1 20161013 offenbart ein Haushaltsgerät und ein Verfahren zum Betreiben eines Haushaltsgeräts mittels Spracherkennung.

Der Erfindung stellt sich die Aufgabe, ein verbessertes Verfahren zum Ansteuern einer Funktion eines Haushaltgeräts, eine verbesserte Vorrichtung zum Ansteuern einer Funktion eines Haushaltgeräts und ein verbessertes Haushaltgerät mit einer Vorrichtung zum Ansteuern einer Funktion des Haushaltgeräts zu schaffen.

Erfindungsgemäß wird diese Aufgabe durch ein Verfahren zum Ansteuern einer Funktion eines Haushaltgeräts, durch eine Vorrichtung zum Ansteuern einer Funktion eines Haushaltgeräts und durch ein Haushaltgerät mit einer Vorrichtung zum Ansteuern einer Funktion des Haushaltgeräts mit den Schritten bzw. Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass mittels des hier vorgestellten Verfahrens eine Funktion eines Haushaltgeräts ausschließlich per Spracheingabe angesteuert werden kann. Vorteilhafterweise kann dabei gleichzeitig sichergestellt werden, dass der Bediener sich in Sichtweite des zu bedienenden Haushaltgeräts befindet. Dazu kann anschließend an einen Sprachbefehl des Bedieners eine Zeichenfolge generiert und auf einem Bildschirm des Haushaltgeräts angezeigt werden, die von dem Bediener vorgelesen werden kann. Wenn die vorgelesene Zeichenfolge mit der angezeigten Zeichenfolge übereinstimmt, kann das Ansteuern der per Sprachbefehl eingegebenen Funktion des Haushaltgeräts erfolgen. Vorteilhafterweise ist dabei keine weitere manuelle Bestätigung oder eine Bestätigung mittels einer Sensoreinrichtung notwendig. Damit ist vorteilhafterweise ein sicheres, einfaches und schnelles Ansteuern der Funktion des Haushaltgeräts per Spracheingabe möglich. Eine Realisierung des Verfahrens ist vorteilhafterweise kostengünstig möglich.

Auch wenn der beschriebene Ansatz anhand eines Haushaltgeräts beschrieben wird, kann das hier beschriebene Verfahren und zusätzlich oder alternativ die hier beschriebene Vorrichtung entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Ein Verfahren zum Ansteuern einer Funktion eines Haushaltgeräts weist zumindest einen Schritt des Einlesens, einen Schritt des Bestimmens, einen Schritt des Ausgebens, einen Schritt des Empfangens und einen Schritt des Bereitstellens auf. Im Schritt des Einlesens wird ein akustisches Eingabesignal eingelesen. Das Eingabesignal repräsentiert einen von einem Bediener gesprochenen Befehl zum Ansteuern der Funktion des Haushaltgeräts. Im Schritt des Bestimmens wird eine Identifikationszeichenfolge zum Bestätigen des Befehls unter Verwendung des Eingabesignals bestimmt. Im Schritt des Ausgebens wird ein Anzeigensignal an eine Schnittstelle zu einer Anzeigeeinrichtung des Haushaltgeräts ausgegeben. Das Anzeigesignal ist ausgebildet, um eine Anzeige der Identifikationszeichenfolge mittels der Anzeigeeinrichtung zu bewirken. Im Schritt des Empfangens wird ein akustisches Bestätigungssignal empfangen. Das Bestätigungssignal repräsentiert eine von dem Bediener gesprochene Identifikationszeichenfolge. Im Schritt des Bereitstellens wird ein an Ansteuersignal zum Ansteuern der Funktion des Haushaltgeräts bereitgestellt. Das Ansteuersignal wird bereitgestellt, wenn die im Schritt des Empfangens empfangene gesprochene Identifikationszeichenfolge der im Schritt des Bestimmens bestimmten Identifikationszeichenfolge entspricht.

Ein Verfahren zum Ansteuern einer Funktion eines Haushaltgeräts weist zumindest einen Schritt des Bestimmens, einen Schritt des Ausgebens, einen Schritt des Einlesens, einen Schritt des Empfangens und einen Schritt des Bereitstellens auf. Im Schritt des Bestimmens wird eine Identifikationszeichenfolge zum Bestätigen des Befehls unter Verwendung des Eingabesignals bestimmt. Im Schritt des Ausgebens wird ein Anzeigensignal an eine Schnittstelle zu einer Anzeigeeinrichtung des Haushaltgeräts ausgegeben. Das Anzeigesignal ist ausgebildet, um eine Anzeige der Identifikationszeichenfolge mittels der Anzeigeeinrichtung zu bewirken. Die Schritte des Ausgebens und Bestimmens werden nach Ablauf einer vorgegebenen Gültigkeitsdauer wiederholt. Im Schritt des Einlesens wird ein akustisches Eingabesignal eingelesen. Das Eingabesignal repräsentiert einen von einem Bediener gesprochenen Befehl zum Ansteuern der Funktion des Haushaltgeräts. Im Schritt des Empfangens wird ein akustisches Bestätigungssignal empfangen. Das Bestätigungssignal repräsentiert eine von dem Bediener gesprochene Identifikationszeichenfolge. Im Schritt des Bereitstellens wird ein an Ansteuersignal zum Ansteuern der Funktion des Haushaltgeräts bereitgestellt. Das Ansteuersignal wird bereitgestellt, wenn während der Gültigkeitsdauer die im Schritt des Empfangens empfangene gesprochene Identifikationszeichenfolge der im Schritt des Bestimmens bestimmten Identifikationszeichenfolge entspricht.

Als Funktion des Haushaltgeräts kann beispielsweise ein Aktivieren einer Gerätefunktion wie das Starten eines Programms des Haushaltgeräts oder ein Bewegen einer Komponente des Haushaltgeräts, wie beispielsweise das Öffnen einer Tür des Geräts, angesteuert werden. Bei dem Haushaltgerät kann es sich beispielsweise um ein Reinigungsgerät wie eine Waschmaschine, einen Wäschetrockner oder einen Geschirrspüler handeln, oder um ein Küchengerät wie beispielsweise einen Backofen, einen Dampfgarer oder ein Kochfeld, oder um ein Zubereitungsgerät wie beispielsweise eine Kaffeemaschine. Das Verfahren kann auch verwendet werden, um ein System von miteinander verbundenen Haushaltgeräten anzusteuern, beispielsweise um mehrere miteinander verbundene Haushaltgeräte gleichzeitig zu aktivieren. Unter dem akustischen Eingabesignal kann beispielsweise ein gesprochener Sprachbefehl verstanden werden. Das Eingabesignal kann beispielsweise über eine Schnittstelle zu einer externen Spracheingabeeinrichtung eingelesen werden, beispielsweise in Form eines Funksignals oder elektrischen Signals. Bei der Identifikationszeichenfolge kann es sich beispielsweise um eine zufällig oder pseudozufällig generierte Zahlenfolge oder Buchstabenfolge handeln, oder um einen Bestätigungscode. Das Anzeigesignal kann beispielsweise an eine Schnittstelle zu einer Anzeigeeinrichtung des Haushaltgeräts mit einem Bildschirm oder anderen Anzeigefeld zum visuellen Anzeigen des Anzeigesignals bereitgestellt werden. Die Identifikationszeichenfolge kann dazu beispielsweise in Schriftform auf dem Bildschirm ausgegeben werden. Das akustische Bestätigungssignal kann beispielsweise als vom Bediener gesprochene Identifikationszeichenfolge eine Zeichenfolge repräsentieren, die der von dem Bildschirm ablesbaren Identifikationszeichenfolge entspricht. Zum Prüfen des Bereitstellens des Ansteuersignals kann beispielsweise die im Schritt des Empfangens empfangene gesprochene Identifikationszeichenfolge mit der im Schritt des Bestimmens bestimmten Identifikationszeichenfolge anhand einer Nachschlagetabelle verglichen werden. Das anstehende Signal kann beispielsweise an ein Steuergerät oder eine andere Komponente des Haushaltgeräts bereitgestellt werden.

Gemäß einer Ausführungsform kann im Schritt des Bestimmens die Identifikationszeichenfolge zufällig oder pseudozufällig oder zumindest teilweise zufällig oder pseudozufällig bestimmt werden. Dazu kann die Identifikationszeichenfolge beispielsweise mittels eines Zufallszahlengenerators oder eines Pseudo-Zufallszahlengenerators als eine Zufallszahlenfolge oder eine Pseudozufallszahlenfolge bestimmt werden. Vorteilhafterweise kann somit vermieden werden, dass die Identifikationszeichenfolge dem Bediener bereits bekannt ist, wodurch eine Fernsteuerung des Haushaltgeräts, bei der sich der Bediener außerhalb der Sichtweite des Haushaltgeräts befindet, ausgeschlossen werden kann.

Zudem kann im Schritt des Bestimmens gemäß einer Ausführungsform als Identifikationszeichenfolge eine Identifikationszeichenfolge bestimmt werden, die eine für das Haushaltgerät spezifische Zuordnungszeichenfolge und eine zufällig oder pseudozufällig bestimmte Zufallszeichenfolge umfasst. Die Identifikationszeichenfolge kann somit einen festen Bestandteil in Form der Zuordnungszeichenfolge und einen variablen Bestandteil in Form der zufällig oder pseudozufällig bestimmten Zufallszeichenfolge aufweisen. Bei der Zuordnungszeichenfolge kann es sich beispielsweise um einen Namen des Haushaltgeräts handeln. Vorteilhafterweise kann somit vermieden werden, dass unbeabsichtigt mehrere per Sprachsteuerung ansteuerbare Haushaltgeräte gleichzeitig angesteuert werden, oder dass ein anderes als das vom Bediener anvisierte Haushaltgerät angesteuert wird.

Die Zuordnungszeichenfolge kann gemäß einer Ausführungsform herstellerseitig vorgegeben sein. Zusätzlich oder alternativ kann die Zuordnungszeichenfolge vom Bediener festlegbar oder festgelegt sein. Vorteilhafterweise ist es somit möglich, die Zuordnungszeichenfolge für den Bediener erkennbar zu realisieren, beispielsweise in Form einer herstellerseitig vorgegebenen Haushaltgeräte-Bezeichnung oder in Form eines vom Bediener festlegbaren oder festgelegten Namens für das Haushaltgerät, der beispielsweise mittels einer Eingabeeinrichtung des Haushaltgeräts eingegeben werden kann. Vorteilhafterweise kann die Identifikationszeichenfolge auf diese Weise nutzerspezifisch eingestellt werden.

Im Schritt des Einlesens kann gemäß einer Ausführungsform das akustische Eingabesignal über eine Schnittstelle zu einem Mikrofon innerhalb oder außerhalb des Haushaltgeräts eingelesen werden. Zusätzlich oder alternativ kann im Schritt des Empfangens das akustische Bestätigungssignal über eine Schnittstelle zu dem Mikrofon empfangen werden. Vorteilhafterweise kann das Eingabesignal und zusätzlich oder alternativ das Bestätigungssignal somit von einem an dem Haushaltgerät angeordneten Mikrofon bereitgestellt werden, oder das Eingabesignal kann über eine externe Spracheingabeeinrichtung bereitgestellt werden. Vorteilhafterweise ist diese Ausführungsform kostengünstig realisierbar, sei es über ein eingebautes Mikrofon oder ein geräteexternes Mikrofon eines vernetzten Systems von Haushaltgeräten.

Auch kann gemäß einer Ausführungsform im Schritt des Einlesens ein Sensorsignal eingelesen werden. Das Sensorsignal repräsentiert eine Entfernung des Bedieners zu dem Haushaltgerät. Im Schritt des Bestimmens kann die Identifikationszeichenfolge dann unter Verwendung des Sensorsignals bestimmt werden. Bei dem Sensorsignal kann es sich beispielsweise um ein von einem Näherungssensor bereitgestelltes Signal handeln. Der Näherungssensor kann beispielsweise in dem Haushaltgerät angeordnet sein. Beispielsweise kann das Sensorsignal verwendet werden, um einen Fokus der Spracheingabe für das Eingabesignal zu positionieren. Wenn das Sensorsignal eine vorbestimmte Entfernung, beispielsweise eine Sichtweite des Bedieners zum Haushaltgerät, repräsentiert, kann die Identifikationszeichenfolge beispielsweise als kürzere Zeichenfolge bestimmt werden.

Außerdem kann im Schritt des Ausgebens gemäß einer Ausführungsform das Anzeigesignal ausgebildet sein, um eine Anzeige des Befehls und der Identifikationszeichenfolge mittels der Anzeigeeinrichtung zu bewirken. Vorteilhafterweise kann somit das Anzeigen des eingelesenen Befehls und der Identifikationszeichenfolge mittels der Anzeigeeinrichtung des Haushaltgeräts bewirkt werden, was dem Bediener ermöglicht zu kontrollieren, ob die Spracheingabe korrekt verarbeitet ist, bevor der Bediener den Befehl mittels des Vorlesens der Identifikationszeichenfolge bestätigt. Dies ist von Vorteil, um die Funktion des Haushaltgeräts zuverlässig, effizient und zeitsparend anzusteuern.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Es wird zudem ein Haushaltgerät mit einer Ausführungsform der vorstehend genannten Vorrichtung vorgestellt. In Verbindung mit dem Haushaltgerät kann eine Ausführungsform der vorstehend genannten Vorrichtung vorteilhaft zum Ansteuern einer Funktion des Haushaltgeräts eingesetzt oder verwendet werden.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Darstellung einer Vorrichtung zum Ansteuern einer Funktion eines Haushaltgeräts gemäß einem Ausführungsbeispiel;
- Figur 2: eine schematische Darstellung eines Haushaltgeräts mit einer Vorrichtung zum Ansteuern einer Funktion des Haushaltgeräts gemäß einem Ausführungsbeispiel;
- Figur 3: ein Ablaufdiagramm eines Verfahrens zum Ansteuern einer Funktion eines Haushaltgeräts gemäß einem Ausführungsbeispiel; und
- Figur 4: ein Ablaufdiagramm eines Verfahrens zum Ansteuern einer Funktion eines Haushaltgeräts gemäß einem weiteren Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

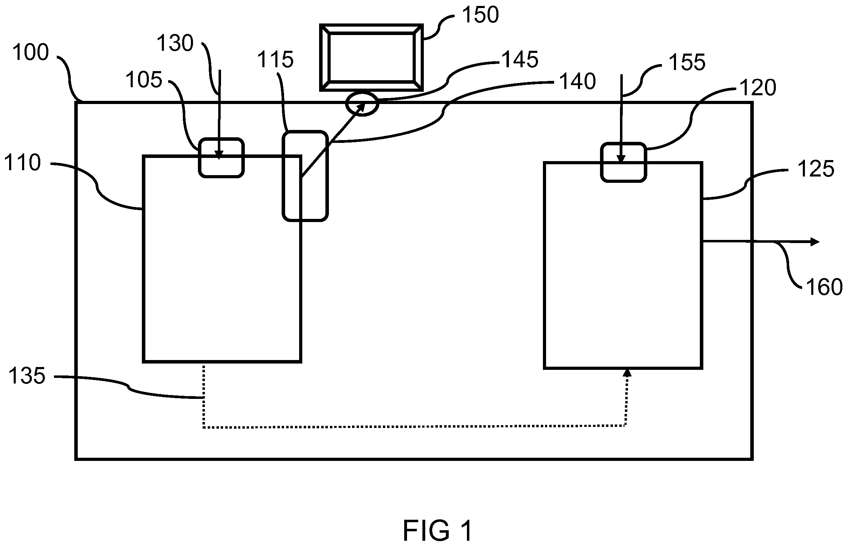

Figur 1 zeigt eine schematische Darstellung einer Vorrichtung 100 zum Ansteuern einer Funktion eines Haushaltgeräts gemäß einem Ausführungsbeispiel. Die Vorrichtung 100 umfasst eine Einleseeinrichtung 105, eine Bestimmungseinrichtung 110, eine Ausgabeeinrichtung 115, eine Empfangseinrichtung 120 und eine Bereitstellungseinrichtung 125. Die Einleseeinrichtung 105 ist ausgebildet, ein akustisches Eingabesignal 130 einzulesen. Das Eingabesignal 130 repräsentiert einen von einem Bediener gesprochenen Befehl zum Ansteuern der Funktion des Haushaltgeräts. Die Bestimmungseinrichtung 110 ist ausgebildet, unter Verwendung des Eingabesignals 130 eine Identifikationszeichenfolge 135 zum Bestätigen des Befehls zu bestimmen. Die Ausgabeeinrichtung 115 ist ausgebildet, ein Anzeigesignal 140 an eine Schnittstelle 145 zu einer Anzeigeeinrichtung 150 des Haushaltgeräts auszugeben. Das Anzeigesignal 140 ist ausgebildet, um eine Anzeige der Identifikationszeichenfolge 135 mittels der Anzeigeeinrichtung 150 zu bewirken. Die Empfangseinrichtung 120 ist ausgebildet, ein akustisches Bestätigungssignal 155 zu empfangen. Das Bestätigungssignal 155 repräsentiert eine von dem Bediener gesprochene Identifikationszeichenfolge. Die Bereitstellungseinrichtung 125 ist ausgebildet, ein Ansteuersignal 160 zum Ansteuern der Funktion des Haushaltgeräts bereitzustellen, wenn die im Schritt des Empfangens empfangene gesprochene Identifikationszeichenfolge des Bestätigungssignals 155 der im Schritt des Bestimmens bestimmten Identifikationszeichenfolge 135 entspricht.

Gemäß dem hier gezeigten Ausführungsbeispiel ist das Anzeigesignal 140 ausgebildet, um eine Anzeige des Befehls und der Identifikationszeichenfolge 135 mittels der Anzeigeeinrichtung zu bewirken. Optional werden der dazu durch das Eingabesignal 130 repräsentierte Befehl und die bestimmte Identifikationszeichenfolge 135 mittels des Anzeigesignals 140 an die Schnittstelle 145 zu der Anzeigeeinrichtung 150 des Haushaltgeräts bereitgestellt, um auf einem Bildschirm der Anzeigeeinrichtung 150 angezeigt zu werden.

Mittels der hier gezeigten Vorrichtung 100 ist die Funktion des Haushaltgeräts per Sprachbefehl ansteuerbar. Der Sprachbefehl wird mit dem Eingabesignal 130 eingelesen. Eine Sicherheits-Bedienungsoption des Haushaltgeräts, die dazu dient sicherzustellen, dass sich der Bediener in Sichtweite des zu bedienenden Haushaltgeräts aufhält, ist mittels der Vorrichtung 100 ohne eine Benutzung der Hände durch den Bediener aktivierbar, indem der Bediener die auf der Anzeigeeinrichtung 150 angezeigte Identifikationszeichenfolge 135 vorliest. Ähnlich wie bei einer manuell zu bedienenden Weiter-Taste eines Haushaltgeräts, beispielsweise eines Kochfelds, wird der Sprachbefehl durch den Bediener bestätigt. Gemäß dem hier gezeigten Ausführungsbeispiel ist die Bestätigung hier jedoch ebenfalls per Sprache möglich, durch das Empfangen des akustischen Bestätigungssignals 155. Dazu spricht der Bediener zunächst den Befehl, z. B. "Tür öffnen". Auf der Anzeigeeinrichtung 150, beispielsweise auf einem Bildschirm des Haushaltgeräts, wird der gesprochene Befehl zusammen mit einem Bestätigungscode, der bestimmten Identifikationszeichenfolge 135 angezeigt. Der Bediener liest den Bestätigungscode ab und spricht ihn aus. Die Empfangseinrichtung 120 empfängt das die gesprochene Identifikationszeichenfolge repräsentierende Bestätigungssignal 155. Die Bereitstellungseinrichtung 125 ist ausgebildet, zu prüfen, ob die empfangene gesprochene Identifikationszeichenfolge des Bestätigungssignals 155 der im Schritt des Bestimmens bestimmten Identifikationszeichenfolge 135 entspricht. Das Haushaltgerät oder das System an Haushaltgeräten führt den gesprochenen Befehl erst nach erfolgreicher Prüfung des gesprochenen Bestätigungscodes aus. Die visuelle Rückmeldung der gesprochenen Befehle durch das Anzeigen des optional den Befehl und die bestimmte Identifikationszeichenfolge 135 umfassende Anzeigesignals 140 vermittelt dem Bediener ein Sicherheitsgefühl. Auf diese Weise ist es möglich, vor dem Bestätigen zu prüfen, ob der eingelesene Sprachbefehl ausgeführt werden soll. Dies ist von Vorteil, da unter Verwendung der Vorrichtung 100 eine Funktion des Haushaltgeräts nicht unbeabsichtigt ausgeführt wird. Es ist zudem nicht erforderlich, dass ein Spracheingabebefehl eine eindeutige Zuordnung des anzusteuernden Haushaltgeräts enthält, was eine effiziente und zeitsparende Bedienung der Vorrichtung 100 und des Haushaltgeräts ermöglicht.

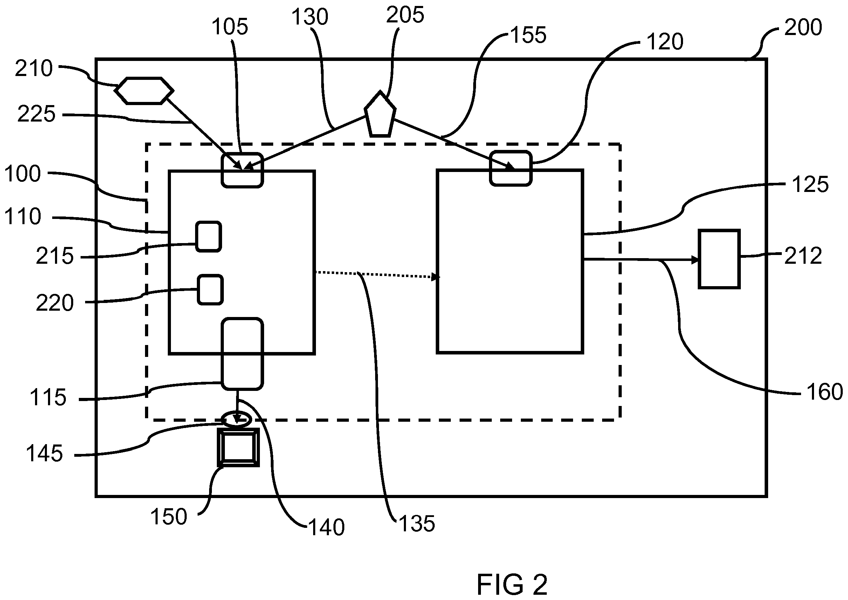

Figur 2 zeigt eine schematische Darstellung eines Haushaltgeräts 200 mit einer Vorrichtung 100 zum Ansteuern einer Funktion des Haushaltgeräts 200 gemäß einem Ausführungsbeispiel. Die Vorrichtung 100 ähnelt oder entspricht der anhand von Figur 1 beschriebenen Vorrichtung. Zudem umfasst das Haushaltgerät gemäß dem hier gezeigten Ausführungsbeispiel die Anzeigeeinrichtung 150, ein Mikrofon 205 und eine Sensoreinrichtung 210, sowie ein Steuergerät 212

Die Bereitstellungseinrichtung 125 ist gemäß dem hier gezeigten Ausführungsbeispiel ausgebildet, das Ansteuersignal 160 an das Steuergerät 212 bereitzustellen, um die Funktion des Haushaltgeräts 200 anzusteuern. Alternativ kann die Vorrichtung 100 als Teil des Steuergeräts 212 ausgeführt sein.

Die Bestimmungseinrichtung 110 ist gemäß dem hier gezeigten Ausführungsbeispiel ausgebildet, die Identifikationszeichenfolge 135 zufällig oder pseudozufällig oder zumindest teilweise zufällig oder pseudozufällig zu bestimmen. Dazu umfasst die Bestimmungseinrichtung 110 einen Zufallszahlengenerator 215.

Zudem ist die Bestimmungseinrichtung 110 optional dazu ausgebildet, die Identifikationszeichenfolge 135 als die eine für das Haushaltgerät 200 spezifische Zuordnungszeichenfolge und eine zufällig oder pseudozufällig bestimmte Zufallszeichenfolge umfassende Identifikationszeichenfolge 135 zu bestimmen. Dazu umfasst die Bestimmungseinrichtung 110 die Zuordnungszeichenfolge 220 und den Zufallszahlengenerator 215. Gemäß einem Ausführungsbeispiel ist die Zuordnungszeichenfolge 220 herstellerseitig vorgegeben und dazu beispielsweise in Form einer vorbestimmten Verarbeitungsvorschrift in der Bestimmungseinrichtung 110 gespeichert. Zusätzlich oder alternativ ist die Zuordnungszeichenfolge 220 gemäß einem Ausführungsbeispiel von dem Bediener festlegbar, beispielsweise mittels einer weiteren Spracheingabe oder mittels einer Eingabeeinrichtung des Haushaltgeräts 200.

Gemäß dem hier gezeigten Ausführungsbeispiel ist die Einleseeinrichtung 105 ausgebildet, das akustische Eingabesignal 130 über eine Schnittstelle zu dem Mikrofon 205 innerhalb Haushaltgeräts 200 einzulesen. Alternativ kann die Einleseeinrichtung 105 ausgebildet sein, das akustische Eingabesignal 130 über eine Schnittstelle zu einem Mikrofon außerhalb des Haushaltgeräts 200 einzulesen. Zudem ist die Empfangseinrichtung 120 gemäß dem hier gezeigten Ausführungsbeispiel ausgebildet, das akustische Bestätigungssignal 155 über eine Schnittstelle zu dem Mikrofon 205 zu empfangen. Alternativ kann die Empfangseinrichtung 120 ausgebildet sein, das akustische Bestätigungssignal 155 über eine Schnittstelle zu einem Mikrofon außerhalb des Haushaltgeräts 200 einzulesen.

Ferner ist die Einleseeinrichtung 105 gemäß dem hier gezeigten Ausführungsbeispiel ausgebildet, ein Sensorsignal 225 einzulesen, das eine Entfernung des Bedieners zu dem Haushaltgerät 200 repräsentiert. Das Sensorsignal 225 wird gemäß dem hier gezeigten Ausführungsbeispiel von der Sensoreinrichtung 210 des Haushaltgeräts 200 bereitgestellt. Die Sensoreinrichtung 210 umfasst beispielsweise einen Näherungssensor, der ausgebildet ist, um die Entfernung des Bedieners zu dem Haushaltgerät 200 zu sensieren und das die sensierte Entfernung repräsentierende Sensorsignal 225 bereitzustellen. In diesem Fall ist die Bestimmungseinrichtung 110 ausgebildet, die Identifikationszeichenfolge 135 unter Verwendung des Sensorsignals 225 zu bestimmen.

Die mittels der Bestimmungseinrichtung 110 bestimmte Identifizierungszeichenfolge 135 umfasst gemäß dem hier gezeigten Ausführungsbeispiel optional einen festen Bestandteil zur Identifizierung des Haushaltgeräts 200 in Form der Zuordnungszeichenfolge 220 und eine mittels des Zufallszahlengenerators 215 bestimmte zufällige oder pseudozufällige Komponente wie beispielsweise eine einstellige Zahl, die sich bei jedem Sprachbefehl ändert. Auf diese Weise ist es vermeidbar, dass der Bediener den Code, die bestimmte Identifikationszeichenfolge 135, auswendig lernt und ihn außerhalb der Sichtweite des Haushaltgeräts 200, beispielsweise aus einem Nebenraum, spricht. Der feste Bestandteil in Form der Zuordnungszeichenfolge 220 enthält optional eine Identifikation des Geräts, beispielsweise in Form einer Gerätebezeichnung wie "Backofen", oder auch einen frei vergebbaren, vom Bediener festlegbaren Bestandteil, beispielsweise in Form eines Namens wie "Lucy". Dies ist auch vorteilhaft, wenn mehrere Haushaltgeräte 200 jeweils die Vorrichtung 100 umfassen und über die Spracheingabe bedienbar sind. Alle Haushaltgeräte 200, die per Spracheingabe bedienbar sind, zeigen optional den verstandenen Befehl und einen individuellen Bestätigungscode an. Über den gesprochenen Code des entsprechenden Haushaltgeräts 200, der mittels der Ausgabeeinrichtung 115 der Vorrichtung 100 in Form des Anzeigesignals 140 über die Schnittstelle 145 zu der Anzeigeeinrichtung 150 des Haushaltgeräts bereitgestellt wird, ist der Sprachbefehl dem entsprechenden Haushaltgerät 200 eindeutig zuordenbar, obwohl der ausgesprochene Befehl, beispielsweise "Tür öffnen", nicht gerätespezifisch ist. Unter Verwendung des Näherungssensors der Sensoreinrichtung 210 ist der Fokus oder das Ziel der Spracheingabe niederschwellig bestimmbar, so ist es möglich, ohne eine manuelle Aktion an dem Haushaltgerät 200 das Ziel eindeutig anzugeben. Wenn zufällig die Näherungssensoren der Sensoreinrichtungen 210 mehrere Haushaltgeräte 200 gleichzeitig betätigt werden, ist über den gerätespezifischen Bestätigungscode in Form der bestimmten Identifikationszeichenfolge 135 eine eindeutige und sichere Zuordnung des Sprachbefehls zu dem Haushaltgerät 200 möglich. Wenn der Fokus der Spracheingabe durch den Näherungssensor der Sensoreinrichtung 210 eindeutig gesetzt ist, ist die Bestimmungseinrichtung 110 optional ausgebildet, die Identifikationszeichenfolge 135 als einfachere und oder kürzere Zeichenfolge zu bestimmen, als wenn der Fokus nicht erkannt ist.

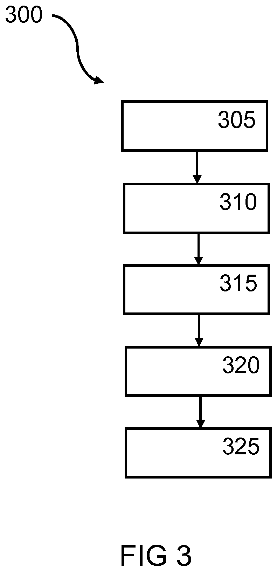

Figur 3 zeigt ein Ablaufdiagramm eines Verfahrens 300 zum Ansteuern einer Funktion eines Haushaltgeräts gemäß einem Ausführungsbeispiel. Das Verfahren 300 ist unter Verwendung eines Ausführungsbeispiels der oben genannten Vorrichtung ausführbar oder ansteuerbar. Das Verfahren 300 umfasst einen Schritt 305 des Einlesens, einen Schritt 310 des Bestimmens, einen Schritt 315 des Ausgebens, einen Schritt 320 des Empfangens und einen Schritt 325 des Bereitstellens. Im Schritt 305 wird ein akustisches Eingabesignal eingelesen, das einen von einem Bediener gesprochenen Befehl zum Ansteuern der Funktion des Haushaltgeräts repräsentiert. Im Schritt 310 wird unter Verwendung des Eingabesignals eine Identifikationszeichenfolge zum Bestätigen des Befehls bestimmt. Im Schritt 315 wird ein Anzeigesignal an eine Schnittstelle zu einer Anzeigeeinrichtung des Haushaltgeräts ausgegeben. Das Anzeigesignal ist ausgebildet, um eine Anzeige der Identifikationszeichenfolge mittels der Anzeigeeinrichtung zu bewirken. Im Schritt 320 wird ein akustisches Bestätigungssignal empfangen, das eine von dem Bediener gesprochene Identifikationszeichenfolge repräsentiert. Im Schritt 325 wird ein Ansteuersignal zum Ansteuern der Funktion des Haushaltgeräts bereitgestellt, wenn die im Schritt 320 des Empfangens empfangene gesprochene Identifikationszeichenfolge der im Schritt 310 des Bestimmens bestimmten Identifikationszeichenfolge entspricht.

Gemäß einem Ausführungsbeispiel wird die Identifikationszeichenfolge im Schritt 310 des Bestimmens zufällig oder pseudozufällig bestimmt. Optional wird im Schritt des Bestimmens 310 zudem eine Identifikationszeichenfolge bestimmt, die eine für das Haushaltgerät spezifische Zuordnungszeichenfolge und eine zufällig oder pseudozufällig bestimmte Zufallszeichenfolge umfasst. Gemäß einem Ausführungsbeispiel ist die Zuordnungszeichenfolge herstellerseitig vorgegeben und zusätzlich oder alternativ von dem Bediener festlegbar.

Im Schritt 305 des Einlesens wird das akustische Eingabesignal gemäß einem Ausführungsbeispiel über eine Schnittstelle zu einem Mikrofon innerhalb oder außerhalb des Haushaltgeräts eingelesen. Zusätzlich oder alternativ wird im Schritt 320 des Empfangens das akustische Bestätigungssignal über eine Schnittstelle zu dem Mikrofon empfangen.

Ferner wird im Schritt 305 des Einlesens gemäß einem Ausführungsbeispiel ein Sensorsignal eingelesen, das eine Entfernung des Bedieners zu dem Haushaltgerät repräsentiert. Im Schritt 310 des Bestimmens wird die Identifikationszeichenfolge dann unter Verwendung des Sensorsignals bestimmt.

Im Schritt 315 des Ausgebens ist das Anzeigesignal gemäß einem Ausführungsbeispiel ausgebildet, um eine Anzeige des Befehls und der Identifikationszeichenfolge mittels der Anzeigeeinrichtung zu bewirken.

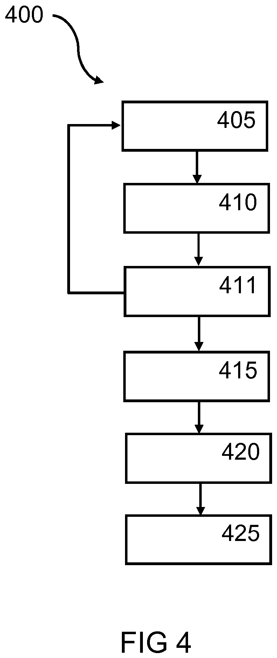

Figur 4 zeigt ein Ablaufdiagramm eines Verfahrens 400 zum Ansteuern einer Funktion eines Haushaltgeräts gemäß einem Ausführungsbeispiel. Das Verfahren 400 ist unter Verwendung eines Ausführungsbeispiels der oben genannten Vorrichtung ausführbar oder ansteuerbar.

Im Schritt 405 wird eine Identifikationszeichenfolge bestimmt. Im Schritt 410 wird ein Anzeigesignal an eine Schnittstelle zu einer Anzeigeeinrichtung des Haushaltgeräts ausgegeben. Das Anzeigesignal ist ausgebildet, um eine Anzeige der Identifikationszeichenfolge mittels der Anzeigeeinrichtung zu bewirken. Nach dem Schritt 411 des Prüfens des Ablaufs einer vorgegebenen Gültigkeitsdauer erfolgt eine Wiederholung der Schritte 405 und 410, was dazu führt, dass eine neue Identifikationszeichenfolge bestimmt und angezeigt wird. Die Identifikationszeichenfolge wird somit nach Ablauf der Gültigkeitsdauer ungültig.

Das Verfahren 400 umfasst einen Schritt 415 des Einlesens, einen Schritt 420 des Bestimmens, einen Schritt 415 des Ausgebens, einen Schritt 420 des Empfangens und einen Schritt 425 des Bereitstellens. Im Schritt 415 wird ein akustisches Eingabesignal eingelesen, das einen von einem Bediener gesprochenen Befehl zum Ansteuern der Funktion des Haushaltgeräts repräsentiert, und zusätzlich ein akustisches Bestätigungssignal eingelesen, das eine von dem Bediener gesprochene Identifikationszeichenfolge repräsentiert. Im Schritt 420 wird der Befehl zum Ansteuern der Funktion des Haushaltsgeräts zusammen mit dem Bestätigungssignal empfangen.

Im Schritt 425 wird ein Ansteuersignal zum Ansteuern der Funktion des Haushaltgeräts bereitgestellt, wenn während der Gültigkeitsdauer die im Schritt 420 des Empfangens empfangene gesprochene Identifikationszeichenfolge der im Schritt 405 des Bestimmens bestimmten Identifikationszeichenfolge entspricht.

Die Gültigkeitsdauer kann in einer Ausführungsform vorzeitig beendet werden bzw. vorzeitig eine neue Identifikationszeichenfolge bestimmt und angezeigt werden, nachdem das Ansteuersignal bereitgestellt wird. In einer Ausführungsform kann das Ansteuersignal auch dann noch bereitgestellt werden, wenn die Gültigkeitsdauer überschritten ist, dies allerdings nur um eine vorgegebene Maximalfrist von beispielsweise 5 Sekunden.

Durch diese Ausführungsform kann eine Befehlsausführung durch das Haushaltgerät beschleunigt werden, da der Bediener die Identifikationszeichenfolge bereits beim Aussprechen der Sprachbefehls verwenden kann. Er muss somit nicht abwarten, bis nach einem Befehl die zugehörige Identifikationszeichenfolge am Haushaltgerät angezeigt wird.

Gemäß einem Ausführungsbeispiel wird die Identifikationszeichenfolge im Schritt 405 des Bestimmens zufällig oder pseudozufällig bestimmt. Optional wird im Schritt des Bestimmens 405 zudem eine Identifikationszeichenfolge bestimmt, die eine für das Haushaltgerät spezifische Zuordnungszeichenfolge und eine zufällig oder pseudozufällig bestimmte Zufallszeichenfolge umfasst. Gemäß einem Ausführungsbeispiel ist die Zuordnungszeichenfolge herstellerseitig vorgegeben und zusätzlich oder alternativ von dem Bediener festlegbar.

Im Schritt 415 des Einlesens wird das akustische Eingabesignal gemäß einem Ausführungsbeispiel über eine Schnittstelle zu einem Mikrofon innerhalb oder außerhalb des Haushaltgeräts eingelesen. Zusätzlich oder alternativ wird im Schritt 420 des Empfangens das akustische Bestätigungssignal über eine Schnittstelle zu dem Mikrofon empfangen.

Ferner wird im Schritt 415 des Einlesens gemäß einem Ausführungsbeispiel ein Sensorsignal eingelesen, das eine Entfernung des Bedieners zu dem Haushaltgerät repräsentiert. Im Schritt 405 des Bestimmens wird die Identifikationszeichenfolge dann unter Verwendung des Sensorsignals bestimmt.

Im Schritt 410 des Ausgebens ist das Anzeigesignal gemäß einem Ausführungsbeispiel ausgebildet, um eine Anzeige des Befehls und der Identifikationszeichenfolge mittels der Anzeigeeinrichtung zu bewirken.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Ansteuern einer Funktion eines Haushaltgeräts (200), wobei das Verfahren (300) folgende Schritte aufweist:
Einlesen (305) eines akustischen Eingabesignals (130), das einen von einem Bediener gesprochenen Befehl zum Ansteuern der Funktion des Haushaltgeräts (200) repräsentiert;
Bestimmen (310) einer Identifikationszeichenfolge (135) zum Bestätigen des Befehls unter Verwendung des Eingabesignals (130);
Ausgeben (315) eines Anzeigesignals (140) an eine Schnittstelle (145) zu einer Anzeigeeinrichtung (150) des Haushaltgeräts (200), wobei das Anzeigesignal (140) ausgebildet ist, um eine Anzeige der Identifikationszeichenfolge (135) mittels der Anzeigeeinrichtung (150) zu bewirken;
Empfangen (320) eines akustischen Bestätigungssignals (155), das eine von dem Bediener gesprochene Identifikationszeichenfolge (135) repräsentiert; und
Bereitstellen (325) eines Ansteuersignals (160) zum Ansteuern der Funktion des Haushaltgeräts (200), wenn die im Schritt (320) des Empfangens empfangene gesprochene Identifikationszeichenfolge der im Schritt (310) des Bestimmens bestimmten Identifikationszeichenfolge (135) entspricht.

2. Verfahren (400) zum Ansteuern einer Funktion eines Haushaltgeräts (200), wobei das Verfahren (400) folgende Schritte aufweist:
Bestimmen (405) einer Identifikationszeichenfolge (135);
Ausgeben (410) eines Anzeigesignals (140) an eine Schnittstelle (145) zu einer Anzeigeeinrichtung (150) des Haushaltgeräts (200), wobei das Anzeigesignal (140) ausgebildet ist, um eine Anzeige der Identifikationszeichenfolge (135) mittels der Anzeigeeinrichtung (150) zu bewirken;
wobei die Schritte des Ausgebens (410) und Bestimmens (405) nach Ablauf einer vorgegebenen Gültigkeitsdauer wiederholt werden;
Einlesen (415) eines akustischen Eingabesignals (130), das einen von einem Bediener gesprochenen Befehl zum Ansteuern der Funktion des Haushaltgeräts (200) repräsentiert;
Empfangen (420) eines akustischen Bestätigungssignals (155), das eine von dem Bediener gesprochene Identifikationszeichenfolge (135) repräsentiert; und
Bereitstellen (425) eines Ansteuersignals (160) zum Ansteuern der Funktion des Haushaltgeräts (200), wenn während der Gültigkeitsdauer die im Schritt (420) des Empfangens empfangene gesprochene Identifikationszeichenfolge der im Schritt (405) des Bestimmens bestimmten Identifikationszeichenfolge (135) entspricht.

3. Verfahren (300) gemäß Anspruch 1 oder 2, wobei im Schritt (310) des Bestimmens die Identifikationszeichenfolge (135) zumindest teilweise zufällig oder pseudozufällig bestimmt wird.

4. Verfahren (300) gemäß einem der vorangegangenen Ansprüche, wobei im Schritt (310) des Bestimmens als Identifikationszeichenfolge (135) eine Identifikationszeichenfolge (135) bestimmt wird, die eine für das Haushaltgerät (200) spezifische Zuordnungszeichenfolge (220) und eine zufällig oder pseudozufällig bestimmte Zufallszeichenfolge umfasst.

5. Verfahren (300) gemäß Anspruch 4, wobei die Zuordnungszeichenfolge (220) herstellerseitig vorgegeben und/oder von dem Bediener festlegbar oder festgelegt ist.

6. Verfahren (300) gemäß einem der vorangegangenen Ansprüche, wobei im Schritt (305) des Einlesens das akustische Eingabesignal (130) über eine Schnittstelle zu einem Mikrofon (205) innerhalb oder außerhalb des Haushaltgeräts (200) eingelesen wird und/oder wobei im Schritt (320) des Empfangens das akustische Bestätigungssignal (155) über eine Schnittstelle zu dem Mikrofon (205) empfangen wird.

7. Verfahren (300) gemäß einem der vorangegangenen Ansprüche, wobei im Schritt (305) des Einlesens ein Sensorsignal (225) eingelesen wird, das eine Entfernung des Bedieners zu dem Haushaltgerät (200) repräsentiert, wobei im Schritt (310) des Bestimmens die Identifikationszeichenfolge (135) unter Verwendung des Sensorsignals (225) bestimmt wird.

8. Verfahren (300) gemäß einem der vorangegangenen Ansprüche, wobei im Schritt (315) des Ausgebens das Anzeigesignal (140) ausgebildet ist, um eine Anzeige des Befehls und der Identifikationszeichenfolge (135) mittels der Anzeigeeinrichtung (150) zu bewirken.

9. Vorrichtung (100), die ausgebildet ist, um die Schritte des Verfahrens (300) gemäß einem der vorangegangenen Ansprüche auszuführen und/oder anzusteuern.

10. Haushaltgerät (200) mit einer Vorrichtung (100) gemäß Anspruch 9.

11. Computer-Programmprodukt mit Programmcode zur Durchführung des Verfahrens (300) nach einem der Ansprüche 1 bis 8, wenn das Computer-Programmprodukt auf einem Computer ausgeführt wird.

## Claims

1. Method (300) for actuating a function of a household appliance (200), wherein the method (300) comprises the following steps:
reading in (305) an acoustic input signal (130) which represents a command to actuate the function of the household appliance (200), which command is spoken by an operator;
determining (310) an identification string (135) for confirming the command using the input signal (130);
outputting (315) a display signal (140) on an interface (145) to a display device (150) of the household appliance (200), wherein the display signal (140) is designed to bring about a display of the identification string (135) by means of the display device (150);
receiving (320) an acoustic confirmation signal (155) which represents an identification string (135) spoken by the operator; and
providing (325) an actuating signal (160) for actuating the function of the household appliance (200) if the spoken identification string received in the receiving step (320) corresponds to the identification string (135) determined in the determination step (310).

2. Method (400) for actuating a function of a household appliance (200), wherein the method (400) comprises the following steps:
determining (405) an identification string (135);
outputting (410) a display signal (140) on an interface (145) to a display device (150) of the household appliance (200), wherein the display signal (140) is designed to bring about a display of the identification string (135) by means of the display device (150);
wherein the output step (410) and determination step (405) are repeated after a predefined period of validity has ended;
reading in (415) an acoustic input signal (130) which represents a command to actuate the function of the household appliance (200), which command is spoken by an operator;
receiving (420) an acoustic confirmation signal (155) which represents an identification string (135) spoken by the operator; and
providing (425) an actuating signal (160) for actuating the function of the household appliance (200) if, during the period of validity, the spoken identification string received in the receiving step (420) corresponds to the identification string (135) determined in the determination step (405).

3. Method (300) according to either claim 1 or claim 2, wherein, in the determination step (310), the identification string (135) is determined at least partially randomly or pseudo-randomly.

4. Method (300) according to any of the preceding claims, wherein, in the determination step (310), an identification string (135) which comprises an association string (220) specific to the household appliance (200) and also comprises a randomly or pseudo-randomly determined random string is determined as the identification string (135).

5. Method (300) according to claim 4, wherein the association string (220) is predefined by the manufacturer and/or can be or is specified by the operator.

6. Method (300) according to any of the preceding claims, wherein, in the reading-in step (305), the acoustic input signal (130) is read into a microphone (205) inside or outside the household appliance (200) via an interface and/or wherein, in the receiving step (320), the acoustic confirmation signal (155) is received by the microphone (205) via an interface.

7. Method (300) according to any of the preceding claims, wherein, in the reading-in step (305), a sensor signal (225) which represents a distance of the operator from the household appliance (200) is read in and wherein, in the determination step (310), the identification string (135) is determined using the sensor signal (225).

8. Method (300) according to any of the preceding claims, wherein, in the output step (315), the display signal (140) is designed to bring about a display of the command and of the identification string (135) by means of the display device (150).

9. Apparatus (100), which is designed to carry out and/or actuate the steps of the method (300) according to any of the preceding claims.

10. Household appliance (200) having an apparatus (100) according to claim 9.

11. Computer program product, comprising program code for executing the method (300) according to any of claims 1 to 8 when the computer program product is run on a computer.

## Revendications

1. Procédé (300) permettant de commander une fonction d'un appareil électroménager (200), le procédé (300) comportant les étapes suivantes :
lecture (305) d'un signal d'entrée acoustique (130) représentant une instruction prononcée par un opérateur pour commander la fonction de l'appareil électroménager (200) ;
détermination (310) d'une chaîne de caractères d'identification (135) pour confirmer l'instruction en utilisant le signal d'entrée (130) ;
sortie (315) d'un signal d'affichage (140) sur une interface (145) avec un moyen d'affichage (150) de l'appareil électroménager (200), le signal d'affichage (140) étant conçu pour entraîner l'affichage de la chaîne de caractères d'identification (135) à l'aide du moyen d'affichage (150) ;
réception (320) d'un signal de confirmation acoustique (155) représentant une chaîne de caractères d'identification (135) prononcée par l'opérateur ; et
mise à disposition (325) d'un signal de commande (160) pour commander la fonction de l'appareil électroménager (200) lorsque la chaîne de caractères d'identification prononcée, reçue à l'étape (320) de réception, correspond à la chaîne de caractères d'identification (135) déterminée à l'étape (310) de détermination.

2. Procédé (400) permettant de commander une fonction d'un appareil électroménager (200), le procédé (400) comportant les étapes suivantes :
détermination (405) d'une chaîne de caractères d'identification (135) ;
sortie (410) d'un signal d'affichage (140) sur une interface (145) avec un moyen d'affichage (150) de l'appareil électroménager (200), le signal d'affichage (140) étant conçu pour entraîner l'affichage de la chaîne de caractères d'identification (135) à l'aide du moyen d'affichage (150) ;
les étapes de sortie (410) et de détermination (405) étant répétées après l'expiration d'une période de validité prédéfinie ;
lecture (415) d'un signal d'entrée acoustique (130) représentant une instruction prononcée par un opérateur pour commander la fonction de l'appareil électroménager (200) ;
réception (420) d'un signal de confirmation acoustique (155) représentant une chaîne de caractères d'identification (135) prononcée par l'opérateur ; et
mise à disposition (425) d'un signal de commande (160) pour commander la fonction de l'appareil électroménager (200) si, pendant la période de validité, la chaîne de caractères d'identification prononcée, reçue à l'étape (420) de réception, correspond à la chaîne de caractères d'identification (135) déterminée à l'étape (405) de détermination.

3. Procédé (300) selon la revendication 1 ou 2, dans lequel, à l'étape (310) de détermination, la chaîne de caractères d'identification (135) est déterminée au moins partiellement de manière aléatoire ou pseudo-aléatoire.

4. Procédé (300) selon l'une des revendications précédentes, dans lequel, à l'étape (310) de détermination, une chaîne de caractères d'identification (135), qui comprend une chaîne de caractères d'affectation (220) spécifique à l'appareil électroménager (200) et une chaîne de caractères aléatoire déterminée de façon aléatoire ou pseudo-aléatoire, est déterminée en tant que chaîne de caractères d'identification (135).

5. Procédé (300) selon la revendication 4, dans lequel la chaîne de caractères d'affectation (220) est définie par le fabricant et/ou peut être établie ou est établie par l'opérateur.

6. Procédé (300) selon l'une des revendications précédentes, dans lequel, à l'étape (305) de lecture, le signal d'entrée acoustique (130) est lu par l'intermédiaire d'une interface avec un microphone (205) à l'intérieur ou à l'extérieur de l'appareil électroménager (200) et/ou dans lequel, à l'étape (320) de réception, le signal de confirmation acoustique (155) est reçu par l'intermédiaire d'une interface avec le microphone (205).

7. Procédé (300) selon l'une des revendications précédentes, dans lequel un signal de capteur (225) représentant un éloignement de l'opérateur par rapport à l'appareil électroménager (200) est lu à l'étape (305) de lecture, dans lequel la chaîne de caractères d'identification (135) est déterminée en utilisant le signal de capteur (225) à l'étape (310) de détermination.

8. Procédé (300) selon l'une des revendications précédentes, dans lequel, à l'étape (315) de sortie, le signal d'affichage (140) est conçu pour entraîner l'affichage de l'instruction et de la chaîne de caractères d'identification (135) à l'aide du moyen d'affichage (150).

9. Dispositif (100) qui est conçu pour mettre en œuvre et/ou commander les étapes du procédé (300) selon l'une des revendications précédentes.

10. Appareil électroménager (200) comportant un dispositif (100) selon la revendication 9.

11. Produit de programme informatique comportant un code de programme destiné à mettre en œuvre le procédé (300) selon l'une des revendications 1 à 8 lorsque le produit de programme informatique est exécuté sur un ordinateur.
